# EUROPEAN PATENT SPECIFICATION

(11) **EP 1 499 404 B1**
(45) Date of publication and mention of the grant of the patent: **02.05.2007**
(21) Application number: 03722782.4
(22) Date of filing: 28.04.2003
(51) Int. Cl.: A63F 13/12

(54) **REMOTE GAMING MECHANISM**
SPIELKONTROLLMECHANISMUS
SYSTEME DE JEU A DISTANCE

(30) Priority: 29.04.2002 GB 0209752
(43) Date of publication of application: 26.01.2005
(73) Proprietor: Motorola, Inc., Schaumburg, IL 60196 (US)
(72) Inventor: COTTERILL, David James, Walsall, West Midlands WS3 4BX (GB); SMART, Daniel James, Birmingham, West Midlands B29 7SN (GB)
(74) Representative: Wray, Antony John
(86) International application number: PCT/GB2003/001785
(87) International publication number: WO 2003/092839

(56) References cited:
- EP-A- 1 180 385
- WO-A-02/078284
- US-A- 5 695 400
- US-B1- 6 264 562

## Description

### Field of the Invention

The present invention relates to an apparatus, methods and protocols for playing electronic games, over a communication network. The invention is applicable to, but not limited to, an apparatus, method and protocols for remote gaming directly between two wireless communication units over a wireless communication network.

### Background of the Invention

In the field of this invention, it is known that mechanisms for playing electronic-based games exist, whereby the games are played over a wireless or wireline communication network between two or more remote communication units. For example, remote gaming is known whereby a plurality of players interact via a network, for example a computer network such as the Internet, in order to participate in playing a game. Increasingly such games are being developed that make use of email and similar messaging services for users/parties to communicate over a network in order to play a game.

Battlemail.com provides one such game that is available via the Internet. This game is described in International Patent Application WO0167275. The patent application describes a method for a first player, hereinafter referred to as the challenger, sending a message containing a challenge for a contest to a Server on the Internet. The message is structured to include attack and defence moves. The Internet Server extracts the challenge information, processes it and then generates a further (second) challenge message. The Internet Server sends this second challenge message to a second player, hereinafter referred to as the opponent.

On receipt of the challenge message from the Server, the opponent is able to accept the challenge, and send a response message back to the server containing its own attack and defence moves. On receipt of the response message, the Internet Server extracts the response data. With the challenge data extracted from the challenge message from the challenger, together with the response data extracted from the response message from the opponent, the Internet Server is able to process both sets of data to determine the outcome of the contest. The Internet Server subsequently generates result messages and sends one to each of the challenger and opponent, informing them of the outcome of the contest.

The inventors of the present invention have recognised a number of problems associated with such a remote gaming method. First, the communication of challenge and response messages over a communication network requires the use of a dedicated server. Communication to and from the dedicated Server utilises a number of communication paths, thereby utilising valuable communication resource.

Another disadvantage of the method of gaming provided by Battlemail.com is that of the results of contests being determined by the server. If a large number of contests take place at any one time, the server is required to handle the various messages and determine the results of the contests on its own. Particularly in a bandwidth constrained communication network, such a processing requirement placed on the Server could seriously slow down the gaming experience for users. The effect of this may be to dissuade players from playing the game in future.

Furthermore, if the server is inoperable for any reason, the players are prevented from playing the game. Again, the effect of any downtime of the Internet site may be to dissuade players from playing the game in future.

Computer networks are not the only networks over which players can interact to play games. Communication networks, and in particular wireless communication networks such as GSM (Global System for Mobile communication) networks, GPRS (General Packet Radio System) networks and 3G (3^{rd} Generation) networks, are increasingly being explored as means for connecting players of games. Such networks have a severe bandwidth limitation. Additionally, a player may be charged for each transmission (and perhaps reception) from the wireless communication unit. Therefore, the inventors of the present invention have recognised that a key issue for playing games over such wireless networks is to keep the number of messages between players to a minimum. In this manner, the amount of bandwidth required to play the game is reduced and the cost to the user is minimised. Furthermore, the inventors have appreciated that certain remote gaming users may prefer to communicate directly between one another, thereby avoiding the potential 'down-time' inconvenience of a gaming web-site.

A need therefore exists for an improved remote gaming mechanism, together with associated communication units, protocols and message formats supporting the gaming mechanism, wherein the abovementioned disadvantages may be alleviated.

### Statement of Invention

In accordance with a first aspect of the present invention, there is provided a wireless communication unit for playing a game with a second remote communication unit, as claimed in Claim 1.

In accordance with a second aspect of the present invention, there is provided a gaming server configured to operate as the second communication unit, as claimed in Claim 7.

In accordance with a third aspect of the present invention, there is provided a wireless, computer-based or processor-based game, as claimed in Claim 8.

In accordance with a fourth aspect of the present invention, there is provided a wireless communication protocol supporting a remote gaming mechanism, as claimed in Claim 9.

In accordance with a fifth aspect of the present invention, there is provided a wireless communication system, as claimed in Claim 12.

In accordance with a sixth aspect of the present invention, there is provided a storage medium storing processor-implementable instructions for controlling one or more processors, as claimed in Claim 13.

Further aspects and advantageous features of the present invention are as described in the appended Claims.

In summary, the present invention provides an improved remote gaming mechanism. In particular, one or more wireless communication units participating in the game, either as a challenger or opponent has been adapted to determine the outcome of a contest. If the wireless communication unit is a challenging communication unit, the wireless communication unit may store, or receive back from the opponent, the challenge data. The wireless communication unit may also receive response data from an opponent. The wireless communication unit is configured to determine the outcome of the contest from the two sets of data. If the wireless communication unit is the opponent, the wireless communication unit stores the received challenge data and, if the challenger is a similar remote communication unit, preferably transmits the response data to the challenger. Nevertheless, the wireless communication unit is configured to determine the outcome of the contest using the received challenge data and any contest or response data generated by a user of the wireless communication unit or stored within the wireless communication unit.

### Brief Description of the Drawings

Exemplary embodiments of the present invention will now be described, by way of example only, with reference to the accompanying drawings, in which:
FIG. 1 illustrates a block diagram of a wireless communication unit operating in a wireless communication system, adapted to support the inventive concepts of the preferred embodiments of the present invention;
FIG. 2 illustrates a message flow diagram between two communication units operating in accordance with the preferred embodiment of the present invention;
FIG. 3 illustrates a flowchart of a communication unit sending a challenge message in accordance with the preferred embodiment of the present invention;
FIG. 4 illustrates a flowchart of a communication unit receiving a challenge message in accordance with the preferred embodiment of the present invention;
FIG. 5 illustrates a flowchart of a communication unit responding to a received challenge message in accordance with the preferred embodiment of the present invention;
FIG. 6 illustrates a flowchart for determining an outcome of a remote game facilitated in accordance with the preferred embodiment of the present invention;
FIG. 7 illustrates a block diagram of a wireless communication unit operating in a wireless communication system, adapted to support the inventive concepts of an alternative embodiment of the present invention;
FIG. 8 illustrates a message flow diagram between two communication units and an intermediate gaming server in accordance with an alternative embodiment of the present invention;
FIG. 9 illustrates the known short message service (SMS) message structure of the GSM communication system, utilised in accordance with the preferred embodiment of the present invention;
FIG. 10 illustrates the user data header of an SMS message utilised in accordance with the preferred embodiment of the present invention;
FIG. 11 illustrates the information element of an SMS message adapted to support the preferred embodiment of the present invention;
FIG. 12 illustrates the message data of an SMS message adapted to support the preferred embodiment of the present invention;
FIG. 13 illustrates a format for the challenger and opponent data applied to an SMS message to support the preferred embodiment of the present invention;
FIG. 14 illustrates a character attribute format for the challenger employed in accordance with the preferred embodiment of the present invention; and
FIG. 15 illustrates an attack/defence move data arrangement employed in accordance with the preferred embodiment of the present invention.

### Description of Preferred Embodiments

The preferred embodiment of the present invention is described with reference to a portable cellular phone capable of transmitting messages, for example, SMS messages over a current or future generation of wireless cellular technology. However, it is within the contemplation of the present invention that the inventive concepts described herein are equally applicable to any other wireless or wireline communication unit, such as a personal data assistant (PDA), a portable or mobile radio, a laptop computer or a wirelessly networked personal computer (PC) that is able to support remote gaming.

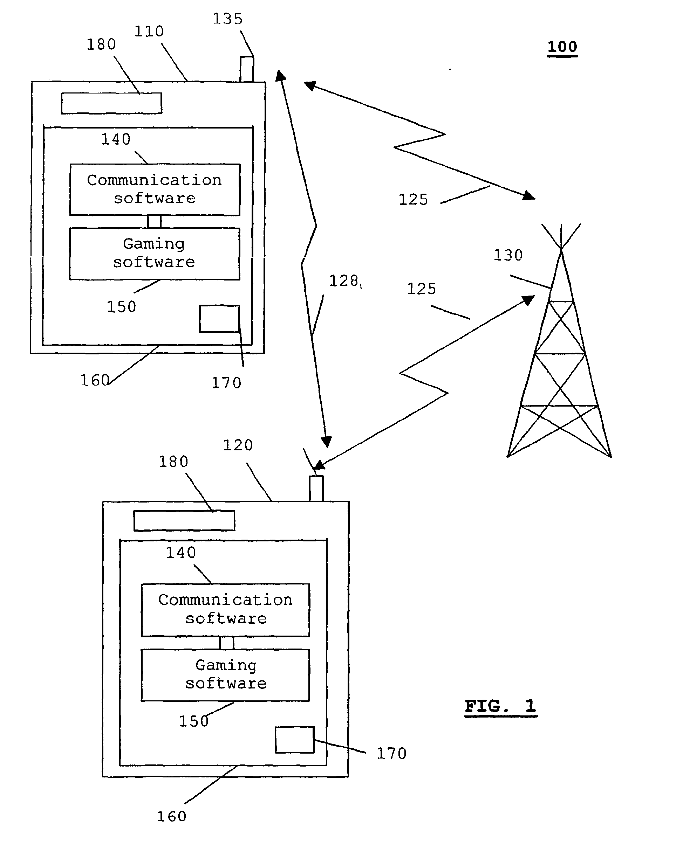

FIG. 1 illustrates a block diagram 100 of a pair of communication units 110, 120, operably coupled via a communication network 130, and adapted to support the inventive concepts of the present invention. In the illustrated embodiment, the pair of communication units - first terminal 110 and second terminal 120 - are wireless communication devices such as cellular mobile telephones, and the network is a wireless communication network such as a GSM network.

Each of the first and second terminals 110, 120 comprise an antenna 135 and transceiver circuitry (not shown) operably coupled to a processor 160. The processor includes communication software 140, to allow the terminals 110, 120 to communicate with the network 130. The processor 160 of each terminal 110, 120 further comprises gaming software 140 to enable the processor to provide the functionality necessary for the terminal to participate in a remote game. In addition, the processor 160 has been adapted to determine an outcome of a game; based on a single received message that includes challenge (or response) data, together with the selected response (or challenge) data of that terminal.

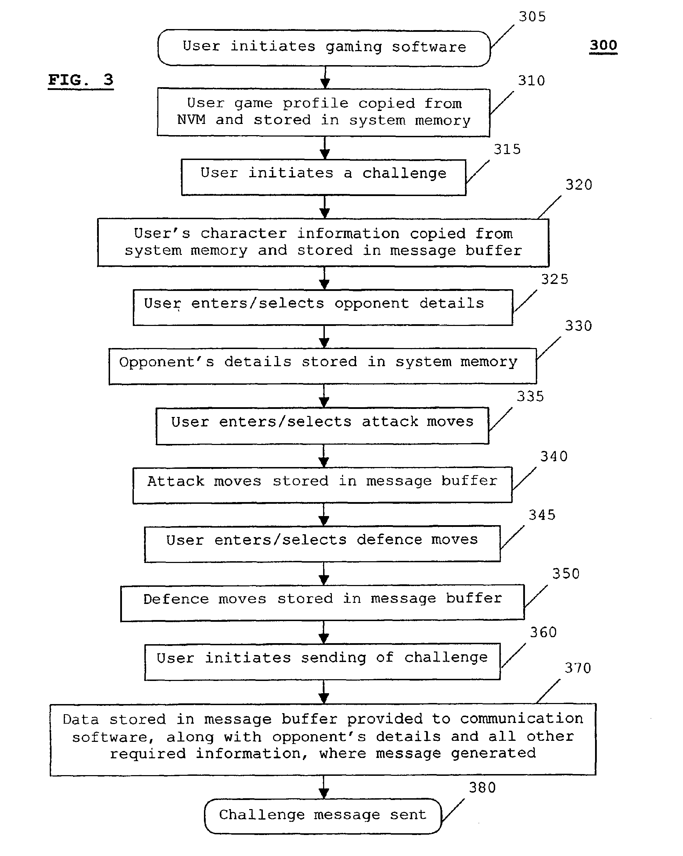

It is within the contemplation of the invention that the processor 160 is operably coupled to a memory element 170 of the terminal 110, 120 such that the processor 160 or associated memory element 170 may be re-programmed with data or an algorithm (such as that described with respect to FIG. 3, FIG. 4, FIG. 5 or FIG. 6) supporting the inventive concepts of the present invention, as described below.

More generally, according to the preferred embodiment of the present invention, such re-programming to effect an improved remote gaming mechanism may be implemented in a respective terminal in any suitable manner. For example, a new memory chip or processor may be added to a conventional cellular subscriber unit.

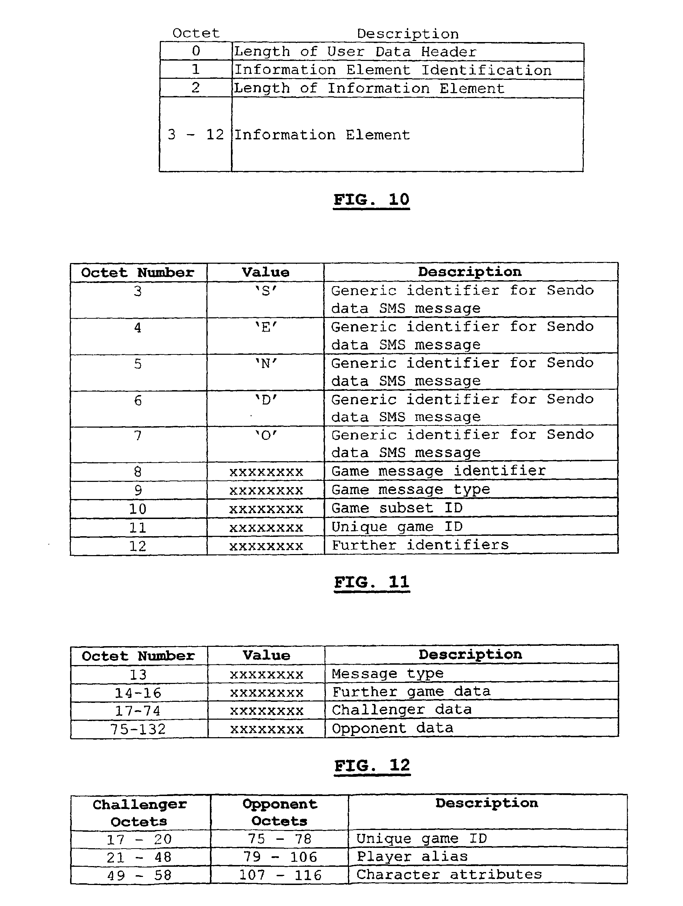

Alternatively, existing parts of a terminal 110, 120 may be adapted, for example by reprogramming one or more processors therein. The adaption may include (re-) programming of the processor 160 to support the gaming protocol or message structure as described with respect to any of FIG. 10 to FIG. 15. As such, the required adaptation may be implemented in the form of processor-implementable instructions stored on a storage medium, such as a floppy disk, hard disk, programmable ROM (PROM), RAM or any combination of these or other storage media.

Users of the terminals 110, 120 are able to interact/communicate 125 with one another over the communication network supported by, say, base station 130, in order to play a game. In an alternative embodiment of the present invention, it is envisaged that the terminals 110, 120 are able to interact/communicate 128 directly with one another, for example over a bluetooth communication link, a wireless local loop (WLL), a direct-mode or two-way radio link, etc.

According to the present invention, this is achieved by the user of the first terminal 110, hereinafter referred to as the challenger, initiating a game. The challenger initiates a game by selecting challenge parameters from a list of options using the gaming software 150. Such an initiation can be effected via the man machine interface (MMI) 180, which preferably includes an output device such as a display and an input device such as a keypad or keyboard (not shown). The gaming software 150 passes challenge parameters, together with optional opponent details, to the communication software 140 of the processor 160. The challenge parameters are used by the processor 160 to create a challenge message. The challenge message is then transmitted over the communication network 130 to the second terminal 120.

The second terminal 120 receives the challenge message, and the challenge (parameters) data and challenger details are extracted from the message by the communication software 140. The challenge parameters are then passed to the gaming software 150. The user of the second terminal 120, hereinafter referred to as the opponent, is then able to accept or reject the challenge, for example via the MMI 180.

On accepting the challenge, the opponent generates a response. The gaming software 150 passes response data together with challenger details to the communication software 140. The processor 160, in co-operation with the communication software 140 creates a response message and transmits the response message over the network 130 to the first terminal 110.

Once the communication software 140 of the second terminal 120 has transmitted the response message, or once the gaming software 150 has passed the response data and challenge data to the communication software 140, the gaming software 150 of the second terminal 120 is able to determine the outcome of the contest by itself. In this regard, the gaming software processes the challenge data, extracted from the challenge message, together with the response data and implements (acts out) the contest in order to determine the result.

The result of the contest is provided to the user, for example displayed on a screen (say, the MMI display) of the terminal 120. This may be achieved once the gaming software 150 has completed processing the data and determined the final result. Alternatively, and/or additionally, as the data is being processed, the various stages of the contest can be displayed to the user, for example each attack move made by the players. This feature is particularly advantageous over comparable remote fighting games such as the Battlemail game, which only shows the results - the contest having being resolved at a remote server, with only the result of the contest being transmitted to the participants.

It is envisaged that the preferred option of displaying various stages would be the default option. Alternatively, it may be provided to the user via the MMI 180, and selectable via the processor 160. Furthermore, it is envisaged that the user is provided with the ability to interrupt a round-by-round account, in order to simply skip to the end of the contest where the final (determined) result may be displayed.

The communication network 130 communicates the response message, transmitted by the communication software 140 of the second terminal 120, to the first terminal 110. The communication software 140 of the first terminal 110 receives the response message, and extracts the challenge data and the response data therefrom. The challenge data and response data are then passed to the gaming software 150 where, in the same manner as above for the second terminal 120, the result of the contest may be determined and displayed to the user.

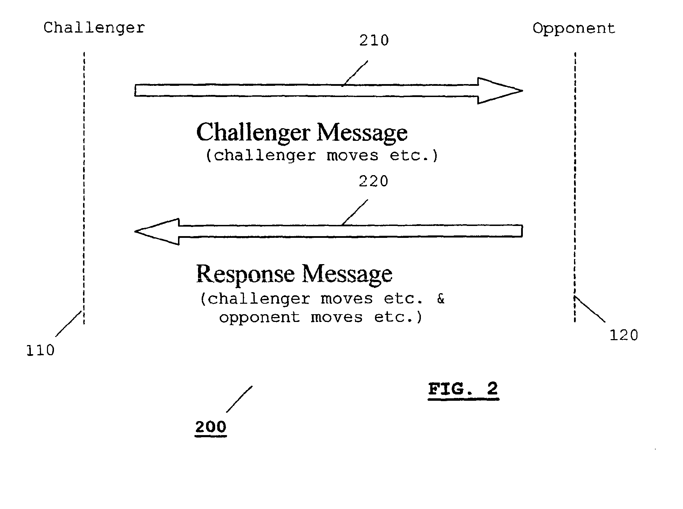

Referring now to FIG. 2, there is illustrated the preferred message flow, between the challenger terminal 110 and the opponent terminal 120, required in order for a single game to take place. However, the inventors of the present invention envisage that in alternative embodiments the data to participate in multiple games could be transmitted in a single (challenge or response) message. In this regard, the data protocols and message formats need to be configured to handle the increased data content. As can be seen, in the preferred embodiment of the present invention, only two messages are required. Namely, a first, challenge message 210 from the challenger to the opponent and a second, response message 220 from the opponent to the challenger.

The challenge message 210 comprises the challenge data, which at least comprises the challenger moves, such as attack moves and defence moves. In this manner, all challenge data required by the opponent in order for a contest to take place is provided in the initial challenge message 210. This allows the gaming software 150 of the second terminal 120 to determine the result of the contest, on its own account, without requiring further data or information from the first terminal 110.

The response message 220 preferably comprises both the challenge data and the response data. As for the challenge message 210, the challenge data comprises at least the challenger moves, such as attack moves and defence moves. In the same manner, the response data comprises at least the opponent moves, such as attack moves and defence moves. In this manner, all challenge data and all response data required to enable a contest to take place are provided in the response message 220. By providing all of the required opponent data in the response message 220, the gaming software 150 of the first terminal 110 is able to determine the result of the contest.

Advantageously, by also providing all of the required challenge data in the response message 220, it is not necessary for the initial challenge data to be stored in an area of memory in the first terminal 110, and subsequently retrieved on receipt of the corresponding response message 220. This reduces the memory requirement of (at least) the first terminal 110.

Furthermore, since there is a possibility that the opponent may reject, i.e. not accept, a challenge, the first terminal 110 will receive no response message. Therefore, if challenge data is stored in an area of memory of the first terminal 110, without a corresponding response message 220 being received, the challenge data stored in memory is wasted.

FIG. 3 illustrates a flowchart 300 of the process for sending a challenge to an opponent. The process starts by the user initiating the gaming software, as in step 305. For example, the user accesses an option in a menu of a man machine interface (MMI) 180 of the first terminal 110.

On initiating the game, user game profile information that has been previously created, for example, during previous games etc., is copied from an area of nonvolatile memory (NVM), as in step 310. The user game profile information may be stored in an area of system memory, such as random access memory (RAM).

In the preferred embodiment of the present invention, the user game profile information may include, by way of example, any one or combination of the following information:
(i) A user's gaming identity, or "alias".
(ii) A character reference, relating to the user's preferred character.
(iii) Character attributes, such as strength, attack skill, defence skill, stamina/health etc, each of which may be improved through playing the game.
(iv) A user's credit or points, which may be earned through playing the game.
(v) References to the character's equipment, including weapons, armour etc, which may be bought, improved or sold in exchange for credit.

In the Battlemail game, a player receives extra points that can be distributed among the attributes to improve them when the player has achieved a sufficiently high score. In contrast to the Battlemail game the preferred embodiment of the present invention awards credits in contests, which can then be used to buy new equipment or pay for training to improve health, strength, attack skill or defence skill. The total number of credits earned (or points), whether spent or not, may also be used at the end of the contest as a way of gauging a user's gaming experience. Namely, the player who has earned the most gold will be deemed the more experienced. The difference in experience between two players is then used to vary the amount of gold that can be earned in a contest, going in favour of the weaker player.

Once the user profile has been retrieved from memory, the user is able to initiate a challenge, as in step 315, by selecting a "challenge" option from a list of game options. The list of options may include one or more of the following:
(i) "Challenge" - create and send a challenge to another player;
(ii) "Messages" - view challenges and/or responses received;
(iii) "Profile" - view the user profile;
(iv) "Attributes" - change/improve character attributes, for example following purchasing equipment, training etc;
(v) "Replay previous contests" - those contests that have been saved;
(vi) "Quit".

Once the user has initiated a challenge, by selecting the challenge option, character information is copied into a message buffer, as in step 320. The character information copied into the message buffer may include the user's alias, the character reference, equipment references, character attributes, user's credit and/or user's points.

Next, the user is preferably provided with the option of entering/selecting opponent details, as in step 325. For example, where the game is to be played between two cellular mobile telephones the user may enter the telephone number for the cellular mobile telephone of the opponent. Alternatively, the user may retrieve the telephone number from a list of numbers stored in an area of memory of the telephone, such as a contacts list, address book, etc.

Once the user has entered/selected the opponent details, these details are stored in system memory, as in step 330.

Subsequently the user enters the desired moves, for example starting with the attack moves, as in step 335, which are preferably stored in the message buffer, as in step 340. The user may then enter the defence moves, as in step 345, which are also preferably stored in the message buffer, as in step 350.

Having entered/selected all required information, the user is then able to transmit a challenge, as in step 360 to a prospective opponent. This results in the challenge data being stored in a message buffer linked to the communication software 140, along with the opponent's details and any other required information, as in step 370. The communication software 140 receives the information and challenge data, and creates the challenge message. The communication unit then transmits the challenge message to the opponent, via the communication network 130, as in step 380.

As previously mentioned, there is no need for the challenge data sent in the challenge message to be retained, since if the opponent accepts the challenge, it is envisaged that the challenge data will be provided in the response message. Therefore, the challenge data can subsequently be discarded, once the challenge message has been sent.

However, if memory space in the communication unit is not a scarce resource, it is envisaged that the challenge data may be retained in a memory element of the first terminal. In this manner, the response from the opponent may be simplified by only including the response data and not replicating the challenge data. Furthermore, in this scenario, it is envisaged that the challenge data may be deleted from the memory after a time period, if no response has been received.

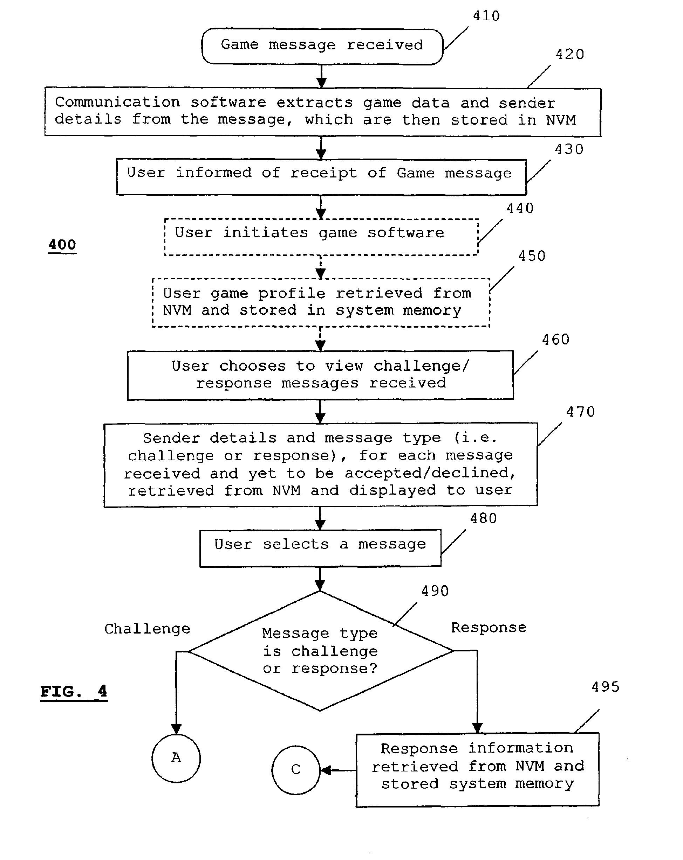

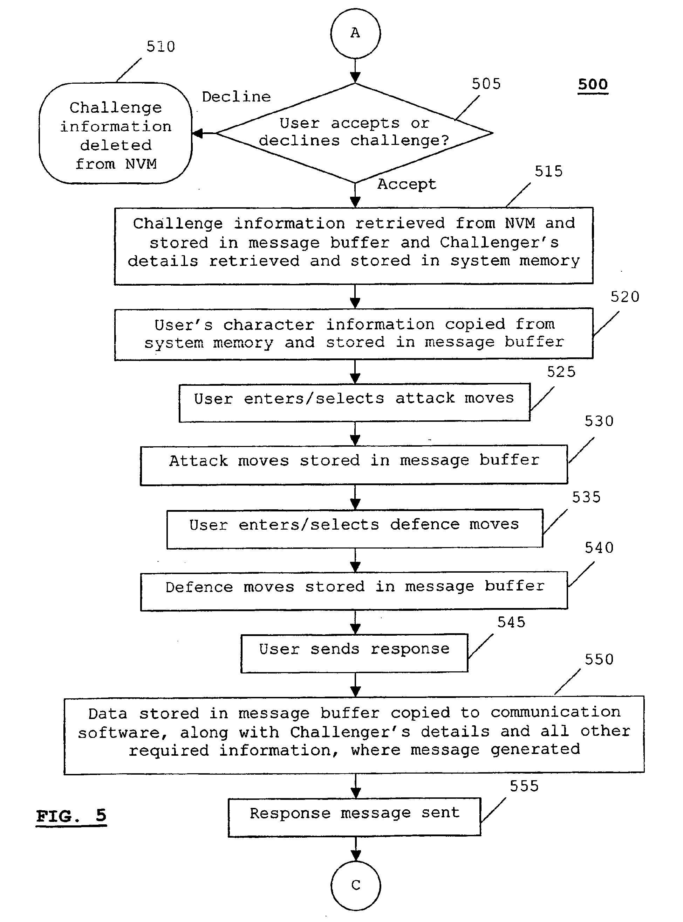

Referring now to FIG. 4 and FIG. 5, flowcharts 400, 500 illustrate the processes involved when a challenge message, or a response message, is received. The processes start when a game message, whether a challenge message or a response message, is received in step 410 in the flowchart of FIG. 4. The message is received by the communication software, which extracts the challenge/response data and the challenger/ opponent details. The details are preferably stored in NVM, as in step 420. The user is then informed of the receipt of the message, as in step 430.

If the user has not already initiated the gaming software, this is performed, as shown in step 440. The user profile is retrieved from NVM and stored in system memory, as in step 450.

The user selects, for example from the list of options described above, to view any received game messages, as in step 460. Sender details and message type for each game message stored in NVM may be retrieved and displayed to the user, as in step 470. The user then selects one of the game messages, as in step 480. The type of message selected in step 490, i.e. challenge or response, determines the next course of action.

It can be seen that if the message selected by the user in step 480 is a response message, the challenge data and response data provided by the response message are retrieved from NVM and stored in memory, as in step 495. The gaming software then uses the challenge data and response data to determine the outcome of the contest.

FIG. 5 illustrates the steps taken when the message selected by the user is a challenge message. The user is provided with the option of accepting or declining the challenge, as in step 505. If the user declines the challenge, the challenge data and associated information are deleted from both the system memory and NVM. Since the terminal of the challenger does not retain the challenge data in the preferred embodiment, there is no requirement for a message to be sent to the challenger informing the challenger, or his/her terminal, that the challenge has been declined.

If the user accepts the challenge, the challenge data is retrieved from NVM, and stored in a message buffer, and the challenger's details are stored in the system memory, as in step 515. Next, the user's character information is copied from system memory into the message buffer, as in step 520.

In the same manner as for steps 335 to 360, when generating a challenge message, the subsequent steps 525 to 545 when generating a response message include the user (opponent) entering attack and defence moves. These moves are stored in the message buffer, and the opponent transmits the response to the challenger.

The data stored in the message buffer, comprising both the challenge data and the response data, together with the challenger's details, are passed to the communication software, as in step 550. The communication software uses the data to create the response message. The message is then sent to the challenger, via the communication network 130, as shown in step 555.

Once the response message has been sent, or once the data has been passed to the communication software to send, the gaming software uses the challenge data and response data, still located in the message buffer, to determine the outcome of the contest.

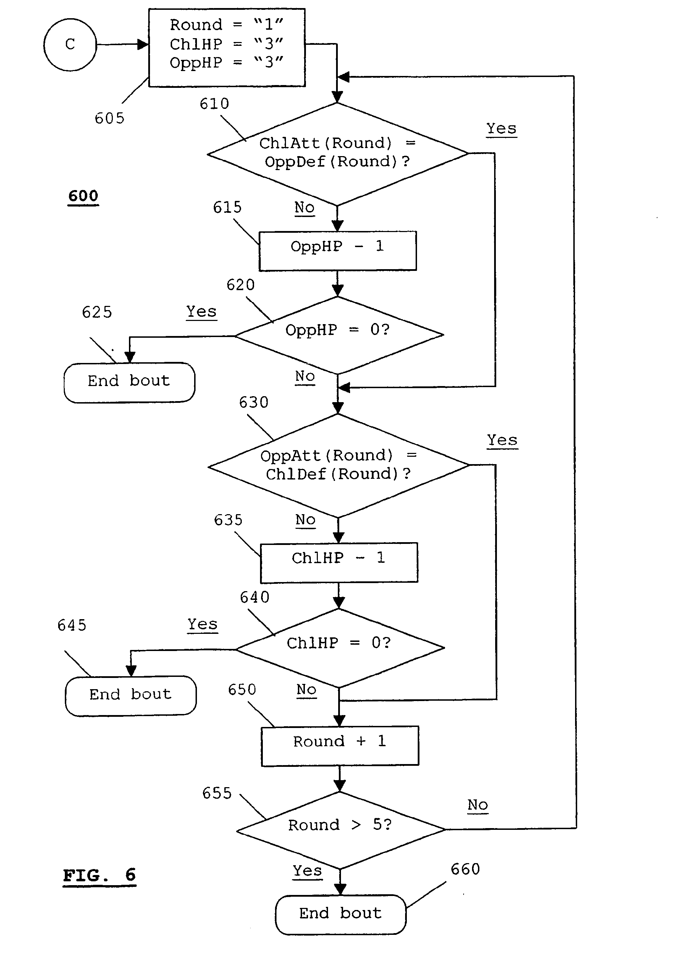

FIG. 6 illustrates an example of how the result of a contest is determined by the communication unit. The initial requirement is for the game variables to be set, as in step 605. In the illustrated embodiment these are:
(i) "Round", this provides a counter for the rounds in the contest;
(ii) "ChlHP", which represents the health points for the challenger; and
(iii) "OppHP", which represents the health points for the challenger.
   Additional/ alternative variables may be, for example, variables representing:
(iv) The strength of the challenger and opponent.
(v) The attack and defence skills of the challenger and opponent.
(vi) The damage characteristics of the weapons of the challenger and opponent.
(vii) The defensive characteristics of the armour and/or shield of the challenger and opponent.
(viii) The stamina or health characteristics of the challenger and opponent.

The following descriptions clarify a preferred example of some of the aforementioned variables.

Character strength: A player starts with a default strength value. Strength can be improved, i.e. increased, by buying appropriate training. In the preferred embodiment of the present invention, the effect of strength relates to the user's armour. If the armour is too heavy for the user, damage inflicted by the user when attacking is reduced (due to the armour inhibiting the user).

Attack and defence skills: A player starts with a default attack skill value and a default defence skill value. These can both be improved by buying appropriate training. These skills affect the amount of health/stamina a player loses when attacked (i.e. the greater the attack skill the more health is lost, the greater the defence skill the less health is lost).

Damage characteristics of weapon: The weapon damage value depends upon the weapon the user has it his/her disposal. The user can buy different weapons. The weapon damage value is used:
a) When an opponent defends (noting that if the opponent's shield value is less than the weapon damage value the difference is used to determine the health lost by the opponent); and
b) When the opponent does not defend again to determine the health lost by the opponent.

Defensive characteristics: This depends on the armour of the player. In the preferred embodiment, the armour consists of a helmet, a breastplate and boots, each having individual defensive points for high, mid and low armour. If the player is defending, armour is not used if the shield is defined as being stronger than the opponent's weapon. However, if the shield is weaker than the weapon, or the player fails to defend, the stronger the armour the less health is lost.

Health/stamina: The player starts with a default health value. Health/stamina can be improved by buying appropriate training. The more health points the player has, the longer the player can last, since more health points need to be lost before the player is incapacitated, etc.

The variable "Round" is initially set to a '1', indicating the first round. "ChlHP" and "OppHP" are initially set to '3' each, providing each character with an initial health value.

Next, the first round begins with the challenger's first attack (being the first round) move (ChlAtt(Round)) being compared to the opponent's first defence move (OppDef(Round)), as in step 610. If the challenger's attack move is equal to the opponent's defence move, the opponent effectively defends the attack.

Where the opponent fails to defend an attack from the challenger, a point is deducted from the opponent's health "OppHP", as in step 615. If the opponent's health is equal to '0', as in step 620, the opponent has been knocked out. At this juncture the contest, or bout, is over, as shown in step 625. Otherwise, the process moves on to the next part of the round where the opponent attacks, as in step 630. After the opponent has defended or attempted to defend the challenger's attack, the process moves on to the next part of the round where the opponent attacks the challenger, as in step 625.

In alternative embodiments, other factors may affect the amount by which the health of the opponent is reduced. It is envisaged that such factors may include one or a combination of:
(i) The strength of the challenger and opponent.
(ii) The attack and defence skills of the challenger and opponent.
(iii) The damage characteristics of the weapons of the challenger and opponent.
(iv) The defensive characteristics of the armour and/or shield of the challenger and opponent.
(v) The stamina or health characteristics of the challenger and opponent.

In step 630, if the opponent's first attack move (OppAtt(Round)) is equal to the challenger's first defence move (ChlDef(Round)) the challenger effectively defends the attack.

When the challenger defends the attack, the process moves to the end of the round, as in step 650. However, where the challenger fails to defend the attack, a point is deducted from the challenger's health "ChlHP", as in step 635. If the opponent's health is then equal to '0', in step 640, the opponent has been knocked out, and the contest, or bout, is over, as in step 645. Otherwise, the process moves on to the next round with the challenger attacking in step 610.

Again, it is envisaged that other factors may affect the amount by which the health of the opponent is reduced, for example the type of weapons used, the training purchased, etc.

At the end of the round, the "Round" variable is incremented by '1', as in step 650. If the "Round" variable has a value greater than '5', then five rounds have taken place, and the contest is over. However, where the "Round" value does not have a value greater than '5', i.e. less than five rounds have been played, the process returns to the beginning of the next round, as in step 610.

It will be appreciated that the number of rounds to be played is illustrated as being '5'. This may be set to any appropriate value, and may be determined by the challenger and/or the opponent.

The outcome of the contest preferably also determines how the user's character attributes, etc. are affected. For example, the user may earn points and/or credit for winning a contest or for the amount of health deducted from the other player, etc.

At the end of the contest, the result is provided to the user, for example displayed on a screen of the terminal, along with any changes to the player's attributes etc. Preferably, the contest is also displayed in a graphical form, for example the characters of the players being shown attacking and defending. This may be displayed once the overall outcome of the contest has been determined. Alternatively, as each round or attack/defence move is evaluated, that round or attack/defence move is displayed graphically to the user. The user is preferably able to select the mode of operation via the MMI.

In a preferred embodiment of the present invention, a user is also able to save the contest in NVM, in order to enable the user to replay the contest at a later stage. This may be in the form of a graphical representation of the contest, or alternatively in the form of the challenge and response data.

In order to reduce the amount of data that is required to be included in the challenge and response messages, preferably attributes such as the user's character, the weapons, armour etc, are each determined using references to a table of attributes. For example, for the user's character, the user is able to select a character from a selection. Each terminal has an identical, or at least similar, selection of characters, the graphical representations for which are stored in NVM. Each character has a character reference that is used to obtain the graphical representation of the character from a lookup table area in memory.

Thus, it is not necessary to include in the challenge and/or response message data providing the graphical representation of the character, only the character reference, which can be used to locate the graphical representation(s) from the NVM of the terminal.

This is particularly advantageous when playing the game via, for example, GSM networks utilising SMS messages for transmitting and receiving the game messages, since only a single SMS message is required for transmitting the challenge data and the response data, and the amount of data should be kept to a minimum.

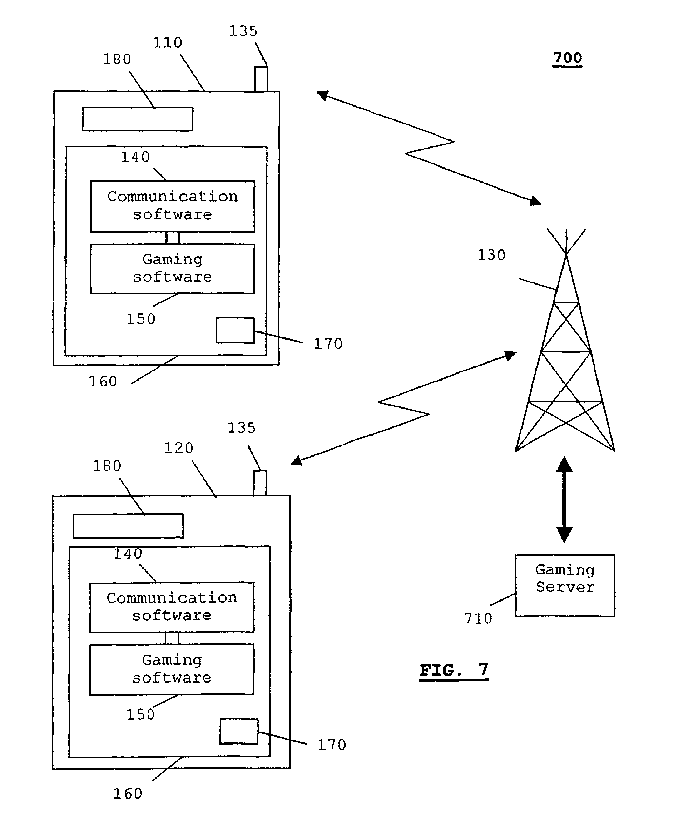

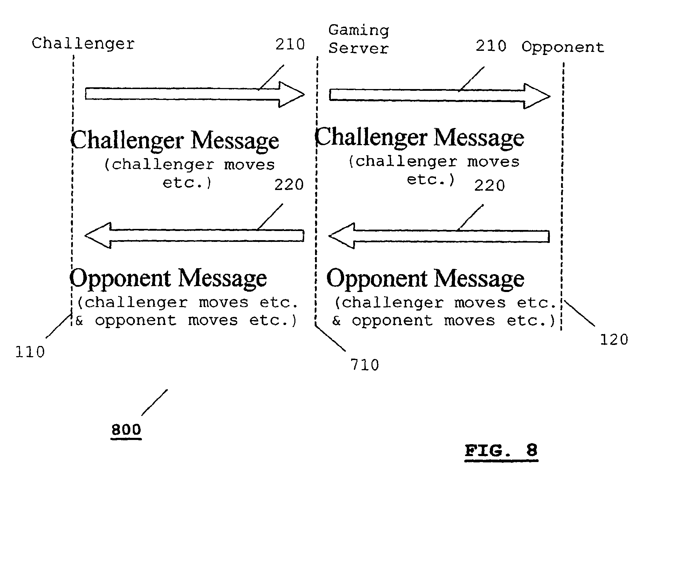

Referring now to FIG. 7 and FIG. 8, a yet further embodiment of the present invention is described. In this further embodiment, it is envisaged that the gaming messages may be routed via, or initiated from, a Central Gaming Server 710. It is envisaged that the Central Gaming Server 710 may be operably coupled to any intermediate communication unit, such as a GSM base station 130, or operating as a stand-alone unit.

In the context of the Central Gaming Server 710 routing challenges/responses, it is possible for a player to send challenges to other players without having to know necessarily the details of the other players. Advantageously, a challenger may initiate a contest with unknown users who, for example, have expressed/registered an interest with the Central Gaming Server 710 to participate in such contests.

In the context of the Central Gaming Server 710 initiating a contest, it is envisaged that the Server 710 may transmit challenge messages to communication units periodically or intermittently. Again, in this regard, it is envisaged that users may have registered an interest in a particular game, supported by the Central Gaming Server 710. It is also envisaged that an operator may impose a charge for such centrally initiated and transmitted challenges.

The Central Gaming Server 710 transmits a challenge to any remote communication units 110, 120 that are capable of accepting such a challenge. Any remote communication unit 110, 120 that accepts the challenge, may determine the outcome of the contest based on the received challenge. The remote communication unit 110, 120 uses the challenge details, together with any input response from the user, say via MMI 180, or any response stored in memory 170. Notably, as there is no need to transmit a response to the Central Gaming Server 710, the contest only requires the transmission of a single challenge message.

Referring now to FIG. 8, a message flow diagram between two communication units and an intermediate (central) Gaming Server 710 is illustrated, in accordance with an alternative embodiment of the present invention. The preferred message flow is from the challenger terminal 110, via the Gaming Server 710, to the opponent terminal 120. As can be seen, when the Gaming Server 710 performs a routing operation only two messages 210, 220 are required. Namely, a first, challenge message 210 from the challenger via the Gaming Server 710 to the opponent and a second, response message 220 from the opponent via the Gaming Server 710 back to the challenger. In this manner, the Gaming Server 710 may extract an identity of the intended opponent from the challenge message and forward the challenge to the opponent.

Notably, in this alternative, when the Gaming Server initiates a challenge, the Gaming Server 710 takes the place of the challenger. In this context, the Gaming Server generates and only transmits the challenger message 210. No response message 220 is required back from the opponent 120.

### Message Protocol

The preferred message protocol, for performing the remote gaming mechanism described above, utilises the short message service (SMS) used by wireless communications devices, such as mobile phones, that are compliant with the Global System for Mobile Communications (GSM) recommendations.

However, it will be appreciated that the message protocol of the present invention may equally be implemented in other messaging formats. One example of alternative message protocols could be electronic mail messaging used for computer networks such as the Internet.

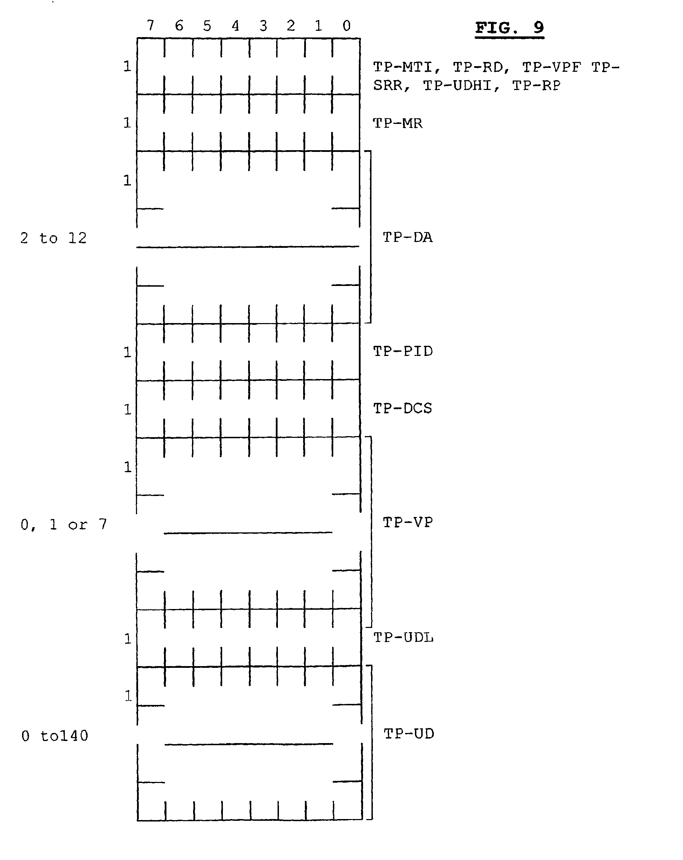

SMS point-to-point messaging is defined in the recommendation GSM 03.40, with the basic structure of an SMS message at the Short Message Transfer layer being illustrated in FIG. 9. The SMS message is divided into octets, highlighted as rows for clarity purposes only, where each octet comprises eight bits numbered '0' to '7'.

As can be seen, the last section of the SMS message is used for Transfer Protocol User Data (TP-UD). This section can be up to one hundred and forty octets in length. The Transfer Protocol-User Data Header Identifier (TP-UDHI) field in the first octet of the message is used to indicate when a user data header is present in the user data section. In accordance with the present invention, the TP-UDHI field is set to a binary value of '1', indicating the presence of a user data header.

The user data header is located at the beginning of the user data section, and is illustrated in FIG. 10. As illustrated, the first octet of the user data header (and therefore of the user data section) provides the overall length of the user data header, which for the illustrated embodiment is '12' (octets), excluding itself.

The second octet of the user data header is used for the 'Information Element Identification' (IEI), which identifies the type of message, for example a concatenated short message, 8-bit reference number, special SMS message indication etc. For the present invention, the IEI preferably has a value of '0x9F', identifying the message as "SME to SME specific use".

The third octet in the user data header provides the length of the information element, which for the illustrated embodiment is '10' (octets), excluding itself. The last ten octets of the user data header comprise the "Information element", which contains the actual header information.

Referring to FIG. 11, the contents of the ten octets of the information element are illustrated in more detail.

For the present invention, the first five octets are used to identify the message as being of a specific set of messages. In the illustrated embodiment, the five octets (octets 3 to 7 of the user data header) contain, in order, the ASCII values "S", "E", "N", "D", and "O", which identify the messages as being a part of a set of "Sendo^{™}" messages.

The next octet contains a message identifier, which for the illustrated embodiment is a gaming message identifier. This identifies the message as being related to a game. The following octet ('9' of the user data header) contains a game message type identifier, which identifies the purpose of the game message. For the illustrated embodiment, this identifies the purpose of the game message as being an interactive gaming message (as opposed to a game download message for downloading a new game or a game update message for updating a game etc.).

The next octet identifies the game subset ID, for example to identify whether a game runs on a proprietary virtual machine, a Java virtual machine or in its own application.

The penultimate octet is used for the unique game ID, which identifies the game with which the message is to be associated. Finally, the last octet of the information element is reserved for further identities. Alternatively, the last octet may be used to increase the size of the unique game ID to two octets.

Following the user data header, starting at octet '13' of the user data section of the message, is the message data. This is illustrated in FIG. 12. Octet '13' contains a value representing the message type. For the illustrated embodiment, there are at least two message types, namely "Challenge" or "Response". The next three octets, namely '14' to '16', provide further game data, such as the version of the particular game, etc. Octets '17' to '74' are used for the Challenger data, and finally octets '75' to '132' are used for the Opponent data, as shown.

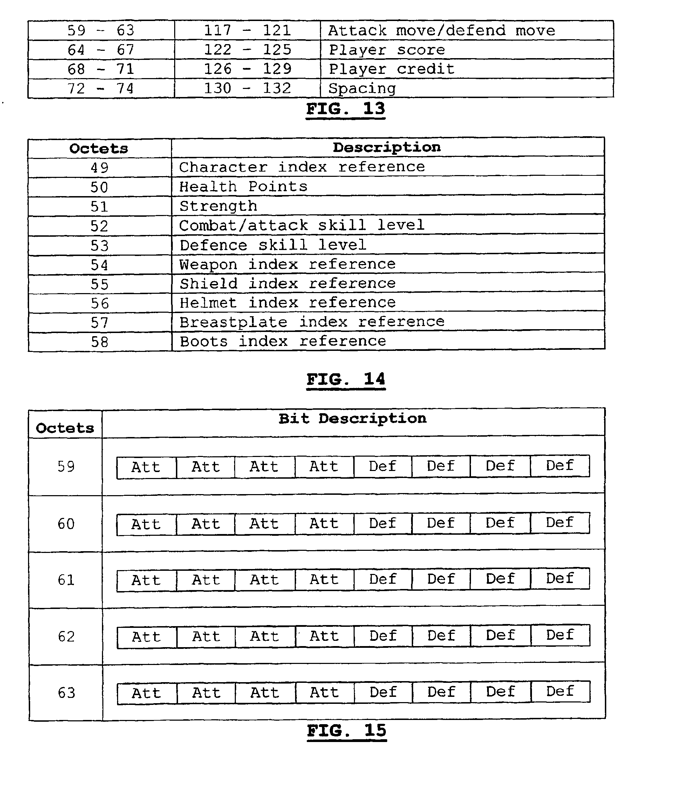

FIG. 13 illustrates the preferred format for the challenger and opponent data. The first four octets are used for a unique user ID. This allows challenges and responses to be associated with one another.

The next twenty-eight octets ('21' to "48') contain an alphanumeric string providing a player "alias". Unicode 2.0 is preferably used to represent the string in binary. Unicode is a universal character-encoding standard for representation of text for computer processing, developed by the Unicode Consortium^{™}.

The next ten octets ('49' to ''58') provide the character attributes, as illustrated in more detail in FIG. 14 for the Challenger. The first octet for the character attributes provides an index reference for the character of the challenger or opponent. This reference is used to locate the graphical representations etc. of the character from a table held in an area of memory of the mobile phone, or other device, to which the message is sent.

The next four octets ('50' to '53') for the character attributes provide integer values for health points, strength, combat/attack skill and defence levels respectively. The final five octets ('54' to '58') of the character attributes provide index references for weapon, shield, helmet, breastplate and boots respectively.

Referring back to FIG. 13, the five octets ('59' to '63') following the character attributes provide the attack and defence moves of the challenger/opponent. These are illustrated in more detail in FIG. 15, wherein it can be seen that each octet is divided into two parts, one part providing an attack move and the second part providing a defence move. In this way five attack moves and five defence moves can be provided using five octets.

Referring back to FIG. 13 once again, following the attack and defence moves, the next four octets ('64' to '67') provide an integer value representing the player score of the challenger/opponent. The subsequent four octets ('68' to '71') provide an integer value for the player credit of the challenger/opponent.

Finally, the last three octets ('72' to '74') are used for spacing, padding out the challenger/opponent data such that it takes up a number of octets ('17' to '132') divisible by four (i.e. 116). One reason for having the number of octets divisible by four is to provide a 32 boundary (4*8 octets) to provide for 'Double Word alignment' as required by compilers.

It is within the contemplation of the invention that the inventive concepts hereinbefore described are not limited to the particular game of the preferred embodiment. Indeed, it is envisaged that the concepts are applicable to any game format where moves can be pre-determined, or a player enters a set of moves, that are not dependent upon knowledge of an opponent's response, such as 'chess'. One example of a game that can be implemented would be a penalty shootout type football game, where the moves are shoot and save, instead of attack and defend.

The preferred embodiment of the present invention has been described with reference to a wireless environment with a processor-based game residing in a wireless communication unit. However, it is within the contemplation of the invention that the inventive concepts are equally applicable to a wire-line computer-based environment.

It will be understood that the improved remote gaming mechanism, together with associated communication units, protocols and message formats supporting the gaming mechanism, as described above, provides at least the following advantages:
(i) Remote gaming is provided directly between two terminals, without the need for a gaming server. This is primarily achieved due to the provision of fewer messages together with the results of contests being determined by each terminal.
(ii) As each game message contains all gaming data, it is not necessary for the terminals to retain gaming data.
(iii) The use of standard attributes, such as character, weapons, armour etc, means that only references need be transmitted between terminals, rather than full graphical representations and characteristics for those attributes, significantly reducing the amount of data required to be transmitted.

Whilst the specific and preferred implementations of the embodiments of the present invention are described above, it is clear that one skilled in the art could readily apply variations and modifications of such inventive concepts.

Thus, an improved remote gaming mechanism, together with associated communication units, protocols and message formats supporting the gaming mechanism, has been described where the aforementioned disadvantages with prior art arrangements have been substantially alleviated.

## Claims

1. A wireless communication unit (110, 120) for playing a game with a second remote communication unit, the communication unit comprising:
a transmitter, for transmitting a gaming message (210) to a second communication unit where the message includes challenge data to initiate a contest with the second remote communication unit;
a receiver, for receiving a response message (220) from the second communication unit; the wireless communication unit **characterised in that**:
a processor (160) is operably coupled to the receiver and is arranged to extract said challenge data and response data from the response message and determines an outcome of the contest based solely on said challenge data and said received response data.

2. The wireless communication unit according to Claim 1, the wireless communication unit further **characterised by** the response message and or challenge message further comprising details of the challenger and/or opponent.

3. The wireless communication unit (110, 120) according to Claim 1, wherein the processor (160) is operably coupled to a display to display to a user of the wireless communication unit a list of options to play a game, wherein said options include one or more of the following:
(i) "Challenge" - create and send a challenge to another player;
(ii) "Messages" - view challenges and/or responses received;
(iii) "Profile" - view the user profile;
(iv) "Attributes" - change/improve character attributes, for example purchasing equipment, training etc;
(v) "Replay previous contests" - those contests that have been saved; and
(vi) "Quit".

4. The wireless communication unit (110, 120) according to Claim 1, wherein the wireless communication unit is one of: a cellular phone, a personal data assistant (PDA), a portable or mobile radio, a laptop computer or a wirelessly networked personal computer (PC) that is able to support remote gaming.

5. The wireless communication unit (110, 120) according to Claim 1, wherein the second communication unit is a gaming server (710) configured to
(i) Initiate challenges to one or more remote communication units (110, 120), or
(ii) Route challenges between two or more remote communication units.

6. The wireless communication unit (110, 120) according to Claim 5, wherein the gaming server (710) is configured to initiate challenges to one or more remote communication units periodically or intermittently.

7. A gaming server (710) configured to operate as the second communication unit in accordance with Claim 1.

8. A wireless, computer-based or processor-based game adapted to operate in the wireless communication unit of Claim 1.

9. A wireless communication protocol employed by a wireless communication unit according to Claim 1, wherein the wireless communication protocol supports a remote gaming mechanism between two communication units.

10. The wireless communication protocol according to Claim 9, wherein at least one message of the protocol includes both challenger and opponent data, to effect an outcome of the contest in either or both of the communication units.

11. The wireless communication protocol according to Claim 9 or Claim 10, wherein a message of the protocol includes at least one attack move and at least one defence move relating to challenger or opponent data.

12. A wireless communication system (100) adapted to facilitate communication (125, 128) between two communication units at least one of which is adapted according to Claim 1 or support the wireless communication protocol according to Claim 9.

13. A storage medium storing processor-implementable instructions for controlling one or more processors in the wireless communication unit of Claim 1.

## Patentansprüche

1. Drahtlose Kommunikationseinheit (110, 120) zum Spielen eines Spiels mit einer zweiten, entfernten Kommunikationseinheit, wobei die Kommunikationseinheit umfasst:
einen Sender zum Senden einer Herausforderungsdaten zur Initiierung eines Wettstreits mit einer zweiten, entfernten Kommunikationseinheit enthaltenden Spielnachricht (210) an die zweite Kommunikationseinheit;
einen Empfänger zum Empfangen einer Antwortnachricht (220) von der zweiten Kommunikationseinheit;
wobei die drahtlose Kommunikationseinheit **dadurch gekennzeichnet ist, dass**
ein Prozessor (160) operativ mit dem Empfänger gekoppelt und so beschaffen ist, dass er die Herausforderungsdaten und die Antwortdaten aus der Antwortnachricht extrahiert und das Ergebnis des Wettstreits ausschließlich auf der Grundlage der Herausforderungsdaten und der empfangenen Antwortdaten bestimmt.

2. Drahtlose Kommunikationseinheit nach Anspruch 1, die ferner **dadurch gekennzeichnet ist, dass** die Antwortnachricht und/oder die Herausforderungsnachricht ferner Einzelheiten zum Herausforderer und/oder Gegner enthalten/enthält.

3. Drahtlose Kommunikationseinheit (110, 120) nach Anspruch 1, bei der der Prozessor (160) operativ mit einer Anzeige zum Anzeigen einer Liste von Optionen zum Spielen eines Spiels für einen Benutzer der drahtlosen Kommunikationseinheit gekoppelt ist, wobei die Optionen eine oder mehrere der folgenden einschließen:
(i) "Herausfordern" - Erzeugen und Senden einer Herausforderung an einen anderen Spieler;
(ii) "Nachrichten" - Einsehen von empfangenen Herausforderungen und/oder Antworten;
(iii) "Profil" - Einsehen des Benutzerprofils;
(iv) "Attribute" - Verändern/Verbessern von Attributen von Figuren, beispielsweise das Erwerben von Ausrüstung, Ausbildung, etc.;
(v) "Erneutes Abspielen vorheriger Wettstreite" - d.h. gespeicherter Wettstreite; und
(vi) "Beenden"

4. Drahtlose Kommunikationseinheit (110, 120) nach Anspruch 1, bei der die drahtlose Kommunikationseinheit entweder ein Mobiltelefon, ein Minicomputer (PDA), ein tragbares bzw. mobiles Funkgerät, ein Laptop Computer oder ein drahtlos vernetzter PC (Personal Computer) ist, das bzw. der Fernspiele unterstützen kann.

5. Drahtlose Kommunikationseinheit (110, 120) nach Anspruch 1, bei der die zweite Kommunikationseinheit ein Spieleserver (710) ist, der so konfiguriert ist, dass er
(i) Herausforderungen an eine bzw. mehrere entfernte Kommunikationseinheiten (110, 120) initiiert oder
(ii) Herausforderungen zwischen zwei oder mehreren entfernten Kommunikationseinheiten weiterleitet.

6. Drahtlose Kommunikationseinheit (110, 120) nach Anspruch 5, bei der der Spieleserver (710) so konfiguriert ist, dass periodisch oder intermittierend Herausforderungen an eine oder mehrere entfernte Kommunikationseinheiten initiiert werden.

7. Spieleserver (710), der so konfiguriert ist, dass er als zweite Kommunikationseinheit nach Anspruch 1 arbeitet.

8. Drahtloses, computer- bzw. prozessorgestütztes Spiel, das zum Betrieb in der drahtlosen Kommunikationseinheit nach Anspruch 1 geeignet ist.

9. Drahtloses Kommunikationsprotokoll, das von einer drahtlosen Kommunikationseinheit nach Anspruch 1 verwendet wird und einen Fernspielmechanismus zwischen zwei Kommunikationseinheiten unterstützt.

10. Drahtloses Kommunikationsprotokoll nach Anspruch 9, bei dem mindestens eine Nachricht des Protokolls zur Veranlassung eines Ergebnisses des Wettstreits in einer oder beiden Kommunikationseinheiten Daten sowohl des Herausforderers als auch des Gegners enthält.

11. Drahtloses Kommunikationsprotokoll nach Anspruch 9 oder 10, bei dem eine Nachricht des Protokolls mindestens einen Angriffszug und mindestens einen Verteidigungszug enthält, die die Daten des Herausforderers oder Gegners betreffen.

12. Drahtloses Kommunikationssystem (100), das zur Unterstützung der Kommunikation (125, 128) zwischen zwei Kommunikationseinheiten geeignet ist, von denen mindestens eine gemäß Anspruch 1 ausgestaltet ist oder das drahtlose Kommunikationsprotokoll nach Anspruch 9 unterstützt.

13. Speichermedium, auf dem von einem Prozessor implementierbare Anweisungen zur Steuerung eines bzw. mehrerer Prozessoren in der drahtlosen Kommunikationseinheit nach Anspruch 1 gespeichert sind.

## Revendications

1. Unité de communication sans fil (110, 120) pour jouer un jeu avec une deuxième unité de communication à distance, l'unité de communication comprenant :
un émetteur pour émettre un message de jeu (210) vers une deuxième unité de communication dans lequel le message comprend des données de défi pour initier un concours avec la deuxième unité de communication à distance ;
un récepteur pour recevoir un message de réponse (220) provenant de la deuxième unité de communication ;
l'unité de communication sans fil étant **caractérisée en ce que** :
un processeur (160) est couplé de manière fonctionnelle au récepteur et est agencé pour extraire lesdites données de défi et données de réponse provenant du message de réponse et détermine un résultat du concours sur la base uniquement desdites données de défi et desdites données de réponse reçues.

2. Unité de communication sans fil selon la revendication 1, l'unité de communication sans fil étant **caractérisée en outre par** le message de réponse et ou le message de défi comprenant en outre les détails de l'adversaire et/ou de l'opposant.

3. Unité de communication sans fil (110, 120) selon la revendication 1, dans laquelle le processeur (160) est couplé de manière fonctionnelle à un affichage pour afficher pour un utilisateur de l'unité de communication sans fil une liste d'options pour jouer un jeu, dans laquelle lesdites options comprennent une ou plusieurs des suivantes :
(i) « Défi » - créer et envoyer un défi à un autre joueur ;
(ii) « Messages » - visualiser les défis et/ou les réponses reçues ;
(iii) « Profil » - visualiser le profil de l'utilisateur ;
(iv) « Attributs » - modifier/améliorer les attributs du caractère, par exemple acheter des équipements, s'entraîner et autres ;
(v) « Rejouer concours précédents » - ces concours qui ont été sauvegardés ; et
(vi) « Quitter ».

4. Unité de communication sans fil (110, 120) selon la revendication 1, dans laquelle l'unité de communication sans fil est l'une parmi : un téléphone cellulaire, un assistant de données personnel (PDA), une radio portative ou mobile, un ordinateur portatif ou un ordinateur personnel en réseau sans fil (PC) qui est capable de supporter le jeu à distance.

5. Unité de communication sans fil (110, 120) selon la revendication 1, dans laquelle la deuxième unité de communication est un serveur de jeu (710) configuré pour
(i) Initier des défis vers une ou plusieurs unités de communication à distance (110, 120), ou
(ii) Acheminer des défis entre deux ou plusieurs unités de communication à distance.

6. Unité de communication sans fil (110, 120) selon la revendication 5, dans laquelle le serveur de jeu (710) est configuré pour initier des défis vers une ou plusieurs unités de communication à distance de manière périodique ou intermittente.

7. Serveur de jeu (710) configuré pour fonctionner comme la deuxième unité de communication selon la revendication 1.

8. Jeu basé sur un ordinateur ou un processeur sans fil destiné adapté à fonctionner dans l'unité de communication sans fil selon la revendication 1.

9. Protocole de communication sans fil utilisé par une unité de communication sans fil selon la revendication 1, dans lequel le protocole de communication sans fil supporte un mécanisme de jeu à distance entre deux unités de communication.

10. Protocole de communication sans fil selon la revendication 9, dans lequel au moins un message du protocole comprend des données d'adversaire et d'opposant, afin d'effectuer un résultat du concours dans l'une ou les deux unités de communication.

11. Protocole de communication sans fil selon la revendication 9 ou la revendication 10, dans lequel un message du protocole comprend au moins un mouvement d'attaque et au moins un mouvement de défense concernant les données d'adversaire ou d'opposant.

12. Système de communication sans fil (100) adapté à faciliter la communication (125, 128) entre deux unités de communication dont au moins une est adaptée selon la revendication 1 ou supporte le protocole de communication sans fil selon la revendication 9.

13. Support de stockage stockant des instructions pouvant être mises en oeuvre par processeur pour contrôler un ou plusieurs processeurs dans l'unité de communication sans fil de la revendication 1.
